# EUROPEAN PATENT APPLICATION

(11) **EP 4 339 452 A1**
(43) Date of publication of application: **20.03.2024**
(21) Application number: 22196299.6
(22) Date of filing: 19.09.2022
(51) Int. Cl.: F03D 7/02

(54) **METHOD FOR OPERATING A WIND TURBINE, CONTROL SYSTEM AND WIND TURBINE**

(71) Applicant: Nordex Energy SE & Co. KG, 22419 Hamburg (DE)
(72) Inventor: Bergemann, Constantin, 22419 Hamburg (DE); Niss, Michael, 22419 Hamburg (DE); Pleus, Stefan, 22419 Hamburg (DE); Veress, Attila-Todor, 22419 Hamburg (DE)
(74) Representative: Epping - Hermann - Fischer

(57) **Abstract**

The method is for operating a wind turbine (100) having a rotor (10) with at least one rotor blade (1, 2, 3), a tower (20) and a pitch setting system (13). The method comprises a step in which first information is provided which is representative for a bending moment of the at least one rotor blade. In another step, second information is provided which is representative for the wind turbulence intensity at the rotor. In another step, third information is provided which is representative for a predetermined maximum allowed bending moment of the at least one rotor blade. The maximum allowed bending moment is dependent on the wind turbulence intensity at the rotor. In another step, fourth information is determined depending on the first, the second and the third information and is representative for whether the bending moment exceeds the maximum allowed bending moment at the wind turbulence intensity. If this is the case, an output signal is generated which is configured to cause the pitch setting system to change the pitch angle of the at least one rotor blade in order to reduce a deflection of the at least one rotor blade towards the tower when passing the tower.

## Description

The present disclosure relates to a method for operating a wind turbine. Furthermore, the disclosure relates to a computer program, a computer-readable data carrier and a control device for performing the method for operating a wind turbine. Moreover, the present disclosure relates to a control system for operating a wind turbine and a wind turbine.

Wind turbines are widely known and are used to convert wind energy into electrical energy. The lengths of the rotor blades used in such wind turbines have increased in recent years. With the increasing lengths, the danger of a collision of the rotor blades with the tower has increased.

One object to be achieved is, therefore, to provide a method for operating a wind turbine which reduces the risk of a collision of the rotor blades with the tower. Further objects to be achieved are to provide a computer program, a computer-readable data carrier and a control device for performing such a method. Additional objects to be achieved are to provide a control system for operating a wind turbine with such a method and a wind turbine which is operable with such a method.

First, the method for operating a wind turbine is specified.

According to an embodiment, the method is for operating a wind turbine having a rotor with at least one rotor blade, a tower and a pitch setting system for setting the pitch angle of the at least one rotor blade. The method comprises a step in which first information is provided. The first information is representative for a bending moment of the at least one rotor blade. In another step, second information is provided. The second information is representative for the wind turbulence intensity at the rotor. In yet another step, third information is provided which is representative for a maximum allowed bending moment of the at least one rotor blade. The maximum allowed bending moment is dependent on the wind turbulence intensity at the rotor. In another step, fourth information is determined depending on the first, the second and the third information. The fourth information is representative for whether the bending moment exceeds the maximum allowed bending moment at the wind turbulence intensity. If this is the case, a further step is executed in which an output signal is generated. The output signal is configured to cause the pitch setting system to change the pitch angle of the at least one rotor blade in order to reduce a deflection of the at least one rotor blade towards the tower when it passes the tower.

The present invention is, inter alia, based on the recognition that a large bending moment of a rotor blade in connection with large wind turbulence intensities bears a high risk of the rotor blades colliding with the tower when passing the tower. The inventors of the present invention therefore had the idea to (temporarily) control the pitch angles of the rotor blades in order to reduce the bending moments of the rotor blades and, thus, to reduce the deflection of the rotor blades towards the tower when they pass the tower. However, the control of the pitch angle is only performed if the maximum allowed bending moment is exceeded, wherein the maximum allowed bending moment itself is dependent on the wind turbulence intensity. In this way, a good differentiation between uncritical production situations and tower clearance critical situations is obtained. Consequently, as a big advantage, the annual energy production (AEP) loss due to the pitching maneuver is kept relatively small.

The method specified herein is, in particular, a computer-implemented method, i.e. is performed by a computer or a processor.

Herein, when information is representative for a certain quantity or certain quantities, this means that the quantity or quantities can be extracted from the information, either directly, or the quantity/quantities can at least be derived from the information, particularly without using further information. In other words, the quantity/quantities is/are stored in the information, or at least data are stored in the information, from which the quantity/quantities can be derived or determined or calculated, respectively. Furthermore, here and in the following, information is, in particular, electronic information, like electronic data.

The bending moment of a rotor blade is herein meant to be the bending moment acting on the rotor blade and causing deflection of the rotor blade out of the rotor plane. The bending moment is, therefore, also referred to as an "out of plane" bending moment. It is a quantity in a reference frame of the rotor blade. This means that it is a quantity of a reference frame rotating with the rotor blade, herein referred to as "rotating reference frame". The rotor plane is the plane in which the rotor blades rotate or the plane perpendicular to the rotational axis of the rotor, respectively.

When comparing bending moments, absolute values of the bending moments are, for example, compared. In case of a pitch angle of 0°, the bending moment is equivalent to the flap bending moment.

The first information is, in particular, determined with the help of measurements. Consequently, the bending moment for which the first information is representative may be referred to as measured bending moment. It may be an estimation of the actual bending moment of the rotor blade. The first information may comprise the corresponding measurement data.

The first information is, for example, representative for a bending moment of the at least one rotor blade when the at least one rotor blade passes the tower during rotation of the rotor or when the at least one rotor blade is close to the tower during rotation of the rotor. The moment when a rotor blade passes the tower is the moment when the rotor blade is in a position in which said rotor blade is most parallel to the tower, i.e. when the length axis of the rotor blade is most aligned or most parallel with the length axis of the tower. For example, in this position, the tip of the rotor blade is closest to the tower and/or to the ground. For example, the position when the rotor blade is most parallel to the tower is assigned an azimuthal position of the rotor of 0° and/or 120° and/or 240°. Herein, an azimuthal angle or position refers to the rotor plane.

"When the at least one rotor blade is close to the tower during rotation of the rotor" herein means, for example, that the at least one rotor blade is in an azimuthal sector of ±90° or ±60° or ±30° around the position at which the rotor blade is most parallel to the tower.

The measurements taken for determining the first information can, but do not necessarily have to, be taken exactly at the moment when the rotor blade is parallel to the tower. Rather, the measurements could also be taken shortly before or after that moment so that it can be assumed that the bending moment extractable from the so determined first information is indeed close to the actual bending moment when the rotor blade passes the tower. For example, the measurements for the first information are taken in a time interval before or after the rotor blade is most parallel to the tower, wherein said time interval is at most as long as half a rotation or a quarter of a rotation of the rotor. For example, the first information is determined from measurements taken when the rotor blade is in an azimuthal angular sector of ± 90° or ± 60° or ± 30° around the position in which the rotor blade is most parallel to the tower.

By way of example, an auxiliary information being representative for the bending moment of the at least one rotor blade is provided continuously, for example at least 10 times or at least 100 times per full rotation of the rotor. The auxiliary information is also representative for the position of the at least one rotor blade assigned to the bending moment. A position being assigned to a bending moment is, in particular, the position the rotor blade has when the measurements for the bending moment are taken. The position of the rotor blade may also be determined from measurements, for example from measurements of the azimuthal position of the rotor. It is then determined which auxiliary information is representative for a position of the at least one rotor blade most parallel to the tower and this auxiliary information is used as the first information.

The second information is representative for the wind turbulence intensity at the rotor. For example, it is representative for the wind turbulence intensity when the at least one rotor blade passes the tower or when it is close to the tower. The second information may also be determined with the help of measurements, and, accordingly, the wind turbulence intensity for which the second information is representative may be referred to as measured wind turbulence intensity. Thus, also here, the wind turbulence intensity extractable from the second information may be an estimation of the actual wind turbulence intensity at the rotor. The second information may comprise the corresponding measurement data. The measurements for the second information may but do not have to be taken exactly at the moment when the at least one rotor blade actually passes the tower. Rather, they are, for example, taken in a time interval around this moment so that the wind turbulence intensity extractable from the so determined second information can be assumed to be close to the actual wind turbulence intensity when the rotor blade actually passes the tower. The same as disclosed for the first information with respect to the time interval and the angular sector for taking the measurements or with respect to the auxiliary information, respectively, is accordingly valid for the second information.

The third information is representative for a (predetermined) maximum allowed bending moment of the at least one rotor blade, e.g. for a maximum allowed bending of the at least one rotor blade when the at least one rotor blade passes the tower or is close to the tower. Thereby, the maximum allowed bending moment is dependent on the wind turbulence intensity at the rotor. For example, the maximum allowed bending moment decreases with increasing wind turbulence intensity, either continuously or stepwise. For example, the third information is representative for two or more maximum allowed bending moments which are different from each other and which are each assigned to a different range of wind turbulence intensities. The maximum allowed bending moment may be an analytic function of the wind turbulence intensity. Alternatively, the third information may be representative for a look-up table with different maximum allowed bending moments assigned to different wind turbulence intensities.

The maximum allowed bending moment in its dependency of the wind turbulence intensity may be determined with help of measurements of an actual wind turbine or may be determined with the help of simulations, for example.

The fourth information is determined depending on the first, the second and the third information. That is, the first, the second and the third information are used to determine directly or indirectly whether the bending moment for which the first information is representative exceeds the maximum allowed bending moment at the wind turbulence intensity for which the second information is representative, i.e. whether it exceeds the maximum allowed bending moment evaluated at the wind turbulence intensity for which the second information is representative. Determining the fourth information may be done in real time, i.e. immediately after providing the first, the second and the third information. For example, the fourth information is determined within a time interval of at most 1 s after the measurements for the first and/or second information have been taken.

If the fourth information is representative for the bending moment to exceed the maximum allowed bending moment at the wind turbulence intensity, an output signal is generated. The output signal is, in particular, an electric signal which can be transmitted via a wire or wirelessly. The output signal is configured to cause the pitch setting system to change the pitch angle of the at least one rotor blade in order to reduce a deflection of the at least one rotor blade towards the tower when it passes the tower. That is, the output signal comprises information which can be evaluated by the pitch setting system and can be translated by the pitch setting system into a mechanical movement of the at least one rotor blade. The information of the output signal may be representative for whether the pitch setting system should change the pitch angle and also by how much it should change the pitch angle.

The generation of the output signal and, optionally, also the setting of the pitch angle may be done in real time. It may be done within a time interval after the measurements for the first information and/or the second information have been taken, which is shorter than the time interval for a full rotation or for half a rotation of the rotor, e.g. within a time interval of at most 2 s.

The pitch angle of the rotor blade is defined, for example, as the angle between the chord line of the rotor blade and the plane of rotation of the rotor (rotor plane). The change of the pitch angle of the rotor blade is, for example, such that the angle of attack of the rotor blade is reduced.

The output signal may be configured to cause the pitch setting system to change the pitch angle of the at least one rotor blade and to maintain that changed pitch angle for at least one or at least two full rotations of the rotor. For example, the changed pitch angle is maintained until a newly determined/provided first information is representative for the bending moment of the at least one rotor blade to be below the maximum allowed bending moment. Afterwards, a further output signal may be generated, which changes the pitch angle back to its value before the change.

As becomes apparent from the last paragraph, the described method steps of providing the first, second and third information, determining the fourth information and, possibly, generating the output signal, may be executed repeatedly, for example each time a rotor blade passes the tower.

According to a further embodiment, the rotor comprises two or more rotor blades. For example, the rotor comprises exactly three rotor blades. All features disclosed in connection with the at least one rotor blade are also disclosed for all other rotor blades. For example, for each rotor blade, first information is provided that is representative for the bending moment of that rotor blade. The output signal is, for example, generated if the bending moment of at least one rotor blade exceeds the maximum allowed bending moment. The maximum allowed bending moment depending on the wind turbulence intensity may be individual for each rotor blade or a common maximum allowed bending moment is provided for all rotor blades.

According to a further embodiment, the output signal is configured to collectively change the pitch angles of all rotor blades. This means that the pitch angles of all rotor blades are changed simultaneously, e.g. by the same amount.

According to a further embodiment, the first information is determined depending on measurements taken with the help of a first sensor system. The first sensor system is, for example, part of the wind turbine. The first sensor system may comprise one or more strain sensors, e.g. optical fiber sensors or strain gauge sensors. Moreover, the first sensor system may comprise a position sensor for measuring the position of the at least one rotor blade. Also the auxiliary information used to determine the first information may be determined depending on the measurements taken with the help of the first sensor system.

According to a further embodiment, the second information is determined depending on measurements taken with the help of a second sensor system. The second sensor system may be part of the wind turbine. For example, the second sensor system comprises at least one sensor for measuring the pitch angle of the at least one rotor blade, at least one sensor for measuring the rotational velocity of the rotor and/or at least one sensor for measuring the power output of the wind turbine. Also the auxiliary information used to determine the second information may be determined depending on the measurements taken with the help of the second sensor system.

According to a further embodiment, the third information is determined with the help of computer simulations of the wind turbine. The computer simulations simulate, for example, the distance of the at least one rotor blade to the tower when passing the tower in dependency on the bending moment. Additionally, the simulations may include the influence of the wind turbulence intensity on the distance of the at least one rotor blade and the tower. From the simulations, it can be determined at which bending moment and, possibly, at which wind turbulence intensity, the rotor blade comes too close to the tower or collides with the tower. This bending moment may then be used as that maximum allowed bending moment.

According to a further embodiment, the method comprises a step in which fifth information is provided. The fifth information is representative for a desired pitch angle change to be caused by the pitch setting system.

For example, the fifth information is determined depending on the first, the second and the third information.

The desired pitch angle change may depend on the excess of the bending moment over the maximum allowed bending moment and/or on the wind turbulence intensity. For example, the desired pitch angle change increases with increasing excess and/or with increasing wind turbulence intensity. The desired pitch angle change may also be determined with the help of simulations.

According to a further embodiment, the output signal comprises the fifth information and is configured to cause the pitch setting system to change the pitch angle of the at least one rotor blade by the desired pitch angle change. For example, the desired pitch angle change is between 0.1° and 3°, inclusive.

Next, the computer program, the computer-readable data carrier and the control device are specified.

According to an embodiment, the computer program comprises instructions which, when the program is executed by a computer, cause the computer to carry out the method for operating a wind turbine according to any one of the embodiments described herein.

According to an embodiment, the computer-readable data carrier has stored thereon the computer program.

According to an embodiment, the control device comprises at least one processor configured to perform the method for operating a wind turbine according to any one of the embodiments described herein. The control device may be a computer, for example. The control device may be part of the wind turbine or may be an external device which is, for example, several km away from the wind turbine, like a computer in a control station. For example, the control device is configured to communicate with the wind turbine via a wire or wirelessly.

Next, the control system for operating a wind turbine is specified. The control system is, in particular, configured to perform the method according to any one of the embodiments described herein. Therefore, all features disclosed for the method are also disclosed for the control system and vice versa.

According to an embodiment, the control system is a control system for operating a wind turbine which has a rotor with at least one rotor blade, a tower and a pitch setting system for setting the pitch angle of the at least one rotor blade. The control system comprises a first sensor system configured to take measurements with the help of which the bending moment of the at least one rotor blade is determinable and a second sensor system configured to take measurements with the help of which the wind turbulence intensity at the rotor is determinable. The control system further comprises the control device as specified herein. The control device is signally connectable or connected to the sensor systems in order to provide the control device with the measurements of the sensor systems. The control device is signally connectable or connected to the pitch setting system in order to provide the pitch setting system with the output signal of the control device so that the pitch setting system sets the pitch angle of the at least one rotor blade depending on the output signal.

For example, the first and/or the second sensor system are signally connectable or are signally connected with the control device via a wire or wirelessly. The first sensor system and/or the second sensor system and/or the control device may be part of the wind turbine, i.e. may be integrated into the wind turbine, or may be external. The control device may be signally connected or connectable to the pitch setting system via wire or wirelessly.

The control device may, accordingly, comprise interfaces for receiving data from the first sensor system and the second sensor system and an interface for sending the output signal.

The pitch setting system may be part of the control system. The pitch setting system comprises, for example, at least one actuator for each of the rotor blades, wherein the actuator is configured to change and/or set the pitch angle of the respective rotor blade.

According to a further embodiment, the first sensor system comprises at least one strain sensor coupled to the at least one rotor blade. For example, each rotor blade is assigned at least one strain sensor coupled thereto. For example, each rotor blade is assigned at least three or at least four strain sensors. Strain sensors allow the bending moment acting on the rotor blade to be determined. All features disclosed for the at least one strain sensor are herein also disclosed for all other strain sensors.

The at least one strain sensor may be integrated into the respective rotor blade or may be applied to an outer surface of the respective rotor blade. The at least one strain sensor may be a temperature compensating strain sensor.

According to a further embodiment, the first sensor system comprises at least one position sensor configured to take measurements from which the position of the at least one rotor blade is determinable. For example, the position sensor measures the azimuthal angular position of the rotor and, from that, the position of the at least one rotor blade can be determined.

According to a further embodiment, the at least one strain sensor is a fiber optic strain sensor.

According to a further embodiment, the at least one strain sensor is a strain gauge sensor.

The at least one rotor blade may be assigned several fiber optic strain sensors or several strain gauge sensors or a combination of at least one fiber optic strain sensor and at least one strain gauge sensor.

According to a further embodiment, the second sensor system comprises at least one sensor for measuring the pitch angle of the at least one rotor blade. Additionally or alternatively, the second sensor system may comprise at least one sensor for measuring the rotational velocity of the rotor. The second sensor system may, additionally or alternatively, comprise a sensor for measuring the power output of the wind turbine. Particularly, from the combination of measurements of the mentioned sensors, the wind turbulence intensity at the rotor can be determined.

Next, the wind turbine is specified.

According to an embodiment, the wind turbine comprises a rotor with at least one rotor blade, a tower and a pitch setting system for setting the pitch angle of the at least one rotor blade. Furthermore, the wind turbine comprises the control system according to any one of the embodiments described herein.

Hereinafter, the method for operating a wind turbine, the control device, the control system and the wind turbine will be explained in more detail with reference to the drawings on the basis of exemplary embodiments. The accompanying figures are included to provide a further understanding. In the figures, elements of the same structure and/or functionality may be referenced by the same reference signs. It is to be understood that the embodiments shown in the figures are illustrative representations and are not necessarily drawn to scale. In so far as elements or components correspond to one another in terms of their function in different figures, the description thereof is not repeated for each of the following figures. For the sake of clarity, elements might not appear with corresponding reference symbols in all figures.
Figure 1 shows an exemplary embodiment of a wind turbine,
Figure 2 and 3 show the behavior of an exemplary embodiment of the wind turbine during operation at different conditions,
Figure 4 shows a flowchart of an exemplary embodiment of the method for operating a wind turbine,
Figure 5 shows a flowchart of a further exemplary embodiment of the method for operating a wind turbine,
Figure 6 shows an exemplary embodiment of simulations,
Figure 7 shows an exemplary embodiment of the control system and the control device.

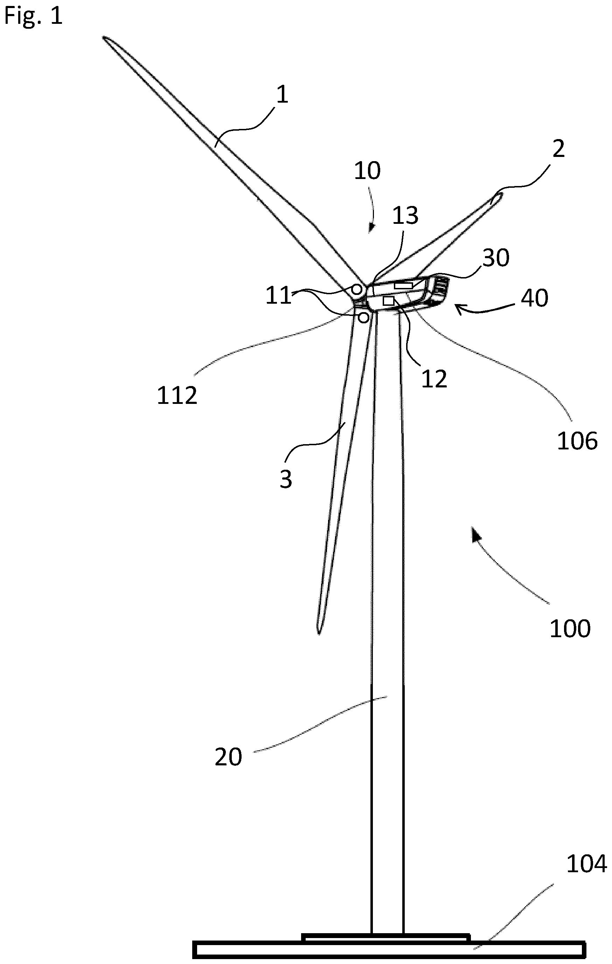

Figure 1 shows a schematic view of an exemplary embodiment of a wind turbine 100 which comprises a tower 20. The tower 20 is fixed to the ground by means of a foundation 104. At one end of the tower 20, opposite to the ground, a nacelle 106 is rotatably mounted. The nacelle 106, for example, comprises a generator which is coupled to a rotor 10 via a gearbox (not shown). The rotor 10 comprises one or more (wind turbine) rotor blades 1, 2, 3, which are arranged on a rotor hub 112, said rotor hub 112 being connected to a rotor shaft (not shown).

During operation, the rotor 10 is set in rotation by an air flow, for example wind. This rotational movement is transmitted to the generator via the rotor shaft and the gearbox. The generator converts the mechanical energy of the rotor 10 into electrical energy.

In order to set the rotational velocity and the power consumption, the wind turbine 100 comprises a pitch setting system 13 which is configured to set the pitch angles of the rotor blades 1, 2, 3. The pitch setting system 13 may be configured to set the pitch angle of each rotor blade 1, 2, 3 individually and/or to set the pitch angles collectively. For example, the pitch setting system 13 comprises at least one actuator for each rotor blade 1, 2, 3 via which an electrical signal is translated into a mechanical movement of the respective rotor blade 1, 2, 3.

The wind turbine 100 further comprises a control system 40 configured to operate the wind turbine 100. The control system 40 comprises a first sensor system 11, a second sensor system 12 and a control device 30.

The first sensor system 11 comprises, for example, three or four strain sensors for each rotor blade 1, 2, 3, wherein the strain sensors are coupled to the respective rotor blade 1, 2, 3. The strain sensors may be fiber optic strain sensors, for example. The measurement signals from the strain sensors may be used to estimate/determine the bending moment acting on the respective rotor blade 1, 2, 3. Furthermore, the first sensor system 11 may comprise at least one position sensor with the help of which the positions of the rotor blades 1, 2, 3 can be determined.

The second sensor system 12 comprises, for example, at least one sensor for measuring the pitch angles of the rotor blades 1, 2, 3, at least one sensor for measuring the rotational velocity of the rotor 10 and at least one sensor for measuring the power output of the wind turbine. The measurement signals of these sensors can be used to estimate/determine the wind turbulence intensity at the rotor 10 and/or the thrust force acting on the rotor 10.

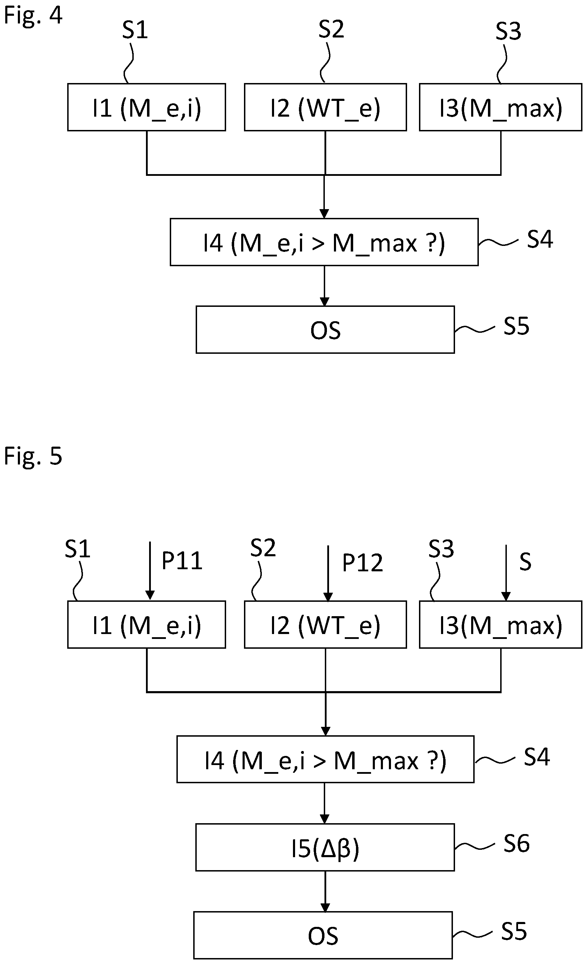

The control device 30 comprises, for example, at least one processor. It may be located in the nacelle 106. The control device 30 is signally connected or connectable to the sensor systems 11, 12 and the pitch setting system 13 so that it can communicate with the systems 11, 12, 13. The measurements from the sensor systems 11, 12 are processed by the control device 30 and, depending on this, an output signal is possibly sent to the pitch setting system 13 in order to adjust the pitch angles of the rotor blades 1, 2, 3. This will be explained in more detail in connection with figures 4 and 5.

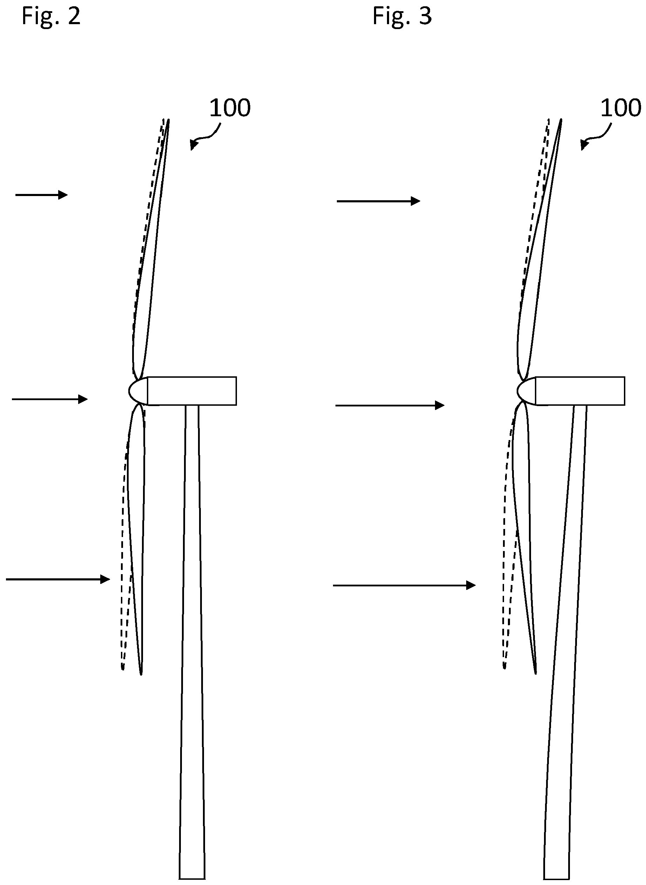

Figure 2 shows the wind turbine 100 from a side view during operation of the wind turbine 100. Wind acting on the wind turbine 100 is indicated by the arrows. As can be seen, the wind has a higher velocity closer to the ground than further away from the ground (so-called negative wind shear). Due to the forces acting on the rotor blades, the rotor blades are deflected with respect to their rest positions (the rest positions are indicated by the dashed lines). Moreover, due to the profile in the wind velocity, the rotor blade passing the tower, i.e. the rotor blade closer to the ground, is deflected more than the rotor blade further away from the tower. Consequently, a tilt bending moment acts on the rotor in order to tilt the rotor plane.

In figure 3, a similar situation as in figure 2 is shown but now with an overall higher wind velocity and corresponding greater wind turbulence intensities. Also in this case, there is a profile in the wind velocity with higher wind velocities closer to the ground. As can be seen, the deflection of the rotor blades is now larger compared to figure 2. Moreover, due to the greater thrust force acting on the rotor, the tower is bended. Due to the higher deflection of the rotor blades and the (greater) bending of the tower, the rotor blades come very close to the tower when passing the tower. This bears the risk of collision. With the method for operating a wind turbine described in the following exemplary embodiments, the risk of a collision can, however, be reduced.

Figure 4 shows a first exemplary embodiment of the method for operating a wind turbine, for example the wind turbine of figure 1. The method comprises a step S1, in which first information I1 is provided, a step S2 in which second information I2 is provided and a step S3 in which third information I3 is provided. The steps may be executed at the same time or one after the other.

The first information I1 is provided for each rotor blade 1, 2, 3 and is in each case representative for the bending moment M_e,1, M_e,2, M_e,3, M_e,i for short, of the respective rotor blade 1, 2, 3, for example for the bending moment when the respective rotor blade 1, 2, 3 passes the tower 20 or is close to the tower 20.

The second information I2 is representative for the wind turbulence intensity WT_e at the rotor 10.

The third information I3 is representative for the maximum allowed bending moments M_max of the rotor blades 1, 2, 3. The maximum allowed bending moments M_max may be different for different rotor blades 1, 2, 3. However, in the present case, the maximum allowed bending moment M_max is the same for all rotor blades 1, 2, 3. The maximum allowed bending moment M_max is dependent on the wind turbulence intensity, e.g. is a function of the wind turbulence intensity. Particularly, the maximum allowed bending moment M_max decreases with increasing wind turbulence intensity.

In step S4, a fourth information I4 is determined depending on the first I1, the second I2 and the third I3 information. The fourth information I4 is representative for whether the bending moment M_e,i of at least one rotor blade 1, 2, 3 exceeds the maximum allowed bending moment M_max at the wind turbulence intensity WT_e extractable from the second information 12. If this is the case, i.e. if the fourth information I4 is representative for the bending moment M_e,i of at least one rotor blade 1, 2, 3 to exceed the maximum allowed bending moment M_max, a step S5 is executed in which an output signal OS is generated. The output signal OS is configured to cause the pitch setting system 13 to change the pitch angles β_1, β_2, β_3, β_i for short, of the rotor blades 1, 2, 3. For example, the pitch angles β_i of all rotor blades 1, 2, 3 are changed collectively, i.e. simultaneously and, optionally, by the same amount.

Figure 5 shows a second exemplary embodiment of the method. The steps S1 to S5 are basically the same as in figure 4. The first information I1 is now determined depending on measurements P11 taken with the help of the first sensor system 11 and the second information I2 is determined depending on measurements P12 taken with the help of the second sensor system 12. For example, measurements are taken with the first 11 and the second 12 sensor system at least each time a rotor blade 1, 2, 3 passes the tower 20 or shortly before it passes the tower 20 or shortly after it passed the tower 20, for example while said rotor blade 1, 2, 3 is within an azimuthal angular sector of ± 60° around the position of the tower 20.

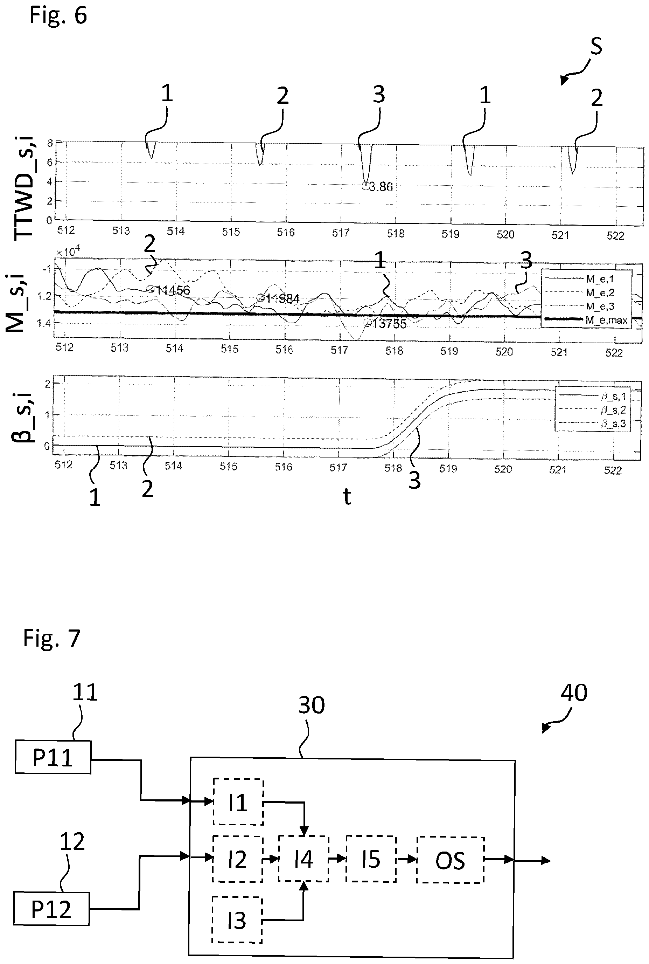

The third information I3 is determined with the help of computer simulations S of the wind turbine 100 simulating the distances TTWD_s,1, TTWD_s,2, TTWD_s,3, TTWD_s,i for short, of the rotor blades 1, 2, 3 to the tower 20 when passing the tower 20 in dependency on the simulated bending moments M_s,1, M_s,2, M_s3, M_s,i for short. This will be explained in connection with figure 6 in more detail.

In the exemplary embodiment of figure 5, a step S6 is performed after the step S4 and before step S5 in the case that the fourth information I4 is representative for the bending moment M_e,i of at least one rotor blade 1, 2, 3 to exceed the maximum allowed bending moment M_max. In the step S6, fifth information I5 is determined depending on the first I1, the second I2 and the third I3 information. The fifth information I5 is representative for a desired pitch angle change Δβ to be caused by the pitch setting system 13. For example, the desired pitch angle change Δβ is determined to be so large that after changing the pitch angles β_i by the desired pitch angle change Δβ, the bending moments M_e,i of the rotor blades 1, 2, 3 fall below the maximum allowed bending moment M_max.

In the step S5, the output signal OS is then generated such that it comprises the fifth information I5 and such that the output signal OS is configured to cause the pitch setting system 13 to change (collectively) the pitch angles β_i of the rotor blades 1, 2, 3 by the desired pitch angle change Δβ.

The previous exemplary embodiments described the case of three rotor blades. However, the method is also applicable to a rotor with only one rotor blade or with two rotor blades or with more than three rotor blades.

Figure 6 shows simulation results S which, for example, are used for determining the third information 13. Figure 6 shows three diagrams. The uppermost diagram illustrates the simulated distances TTWD_s,i of the three rotor blades 1, 2, 3 (in meters) to the tower 20 as a function of time t (in seconds). The distances TTWD_s,i are in each case smallest when the respective rotor blade 1, 2, 3 passes the tower 20. As can be seen, when passing the tower 20 the simulated distances TTWD_s,i are between 3 m and 5 m.

The middle diagram illustrates the corresponding simulated bending moments M_s,i of the three rotor blades 1, 2, 3 (in kN) as a function of time t (in seconds).

For determining the third information 13, it is for example predefined that a minimum allowed simulated distance TTWD_s,i of a rotor blade 1, 2, 3 to the tower 20 when passing the tower 20 is above 3 m. As can be seen in the upper diagram, only the third rotor blade 3 falls below this value when it passes the tower 20. From the simulations S it can be extracted that the simulated bending moment M_s,3 of the third rotor blade 3 when passing the tower 20 is 13755 kN. The maximum allowed bending moment M_max for a rotor blade 1, 2, 3 when passing the tower 20 or when being close to the tower 20 can then be determined to be below this value, for example to be 13500 kN (see horizontal line in the middle diagram).

In figure 6, simulations S are shown for one certain wind turbulence intensity. The simulations can be performed for further wind turbulence intensities and with this, the maximum allowed bending moment M_max depending on the wind turbulence intensity can be obtained. For example, for each simulated wind turbulence intensity, the minimum allowed simulated distance TTWD_s,i to the tower 20 is set to 3 m and, as described above, a respective maximum allowed bending moment M_max can be extracted in each case. In this way, for example, a lookup table in which different maximum allowed bending moments M_max are assigned to different wind turbulence intensities is obtained and this lookup table is stored in the third information 13.

The lower diagram of figure 6 shows simulated pitch angles β_s,i of the three blades 1, 2, 3 and how they are changed with the method for operating a wind turbine described herein. As soon as the bending moment of a rotor blade exceeds the maximum allowed bending moment (which is the case for rotor blade 3), the output signal OS is generated and causes the pitch setting system 13 to collectively increase the simulated pitch angles β_s,i by a desired pitch angle change Δβ which, in the present case, is about two 2°.

Figure 7 shows an exemplary embodiment of the control system 40. The control system 40 comprises the sensor systems 11, 12, with which the measurements P11, P12 can be taken. These measurements are provided to the control device 30 which performs the method steps as described in connection with figures 4 and 5 and delivers an output signal OS, which the control system 40 then transmits to the pitch setting system 13 of the wind turbine 100 in order to adjust the pitch angles.

The invention described herein is not limited by the description in conjunction with the exemplary embodiments. Rather, the invention comprises any new feature as well as any combination of features, particularly including any combination of features in the patent claims, even if said feature or said combination per se is not explicitly stated in the patent claims or exemplary embodiments.

### Reference signs

- 1: first rotor blade
- 2: second rotor blade
- 3: third rotor blade
- 10: rotor
- 11: first sensor system
- 12: second sensor system
- 13: pitch control system
- 20: tower
- 30: control device
- 40: control system
- 100: wind turbine
- 104: foundation
- 106: nacelle
- 112: rotor hub

- I1: first information
- I2: second information
- I3: third information
- I4: fourth information
- I5: fifth information
- OS: output signal

- M_e,i: bending moment
- M_s,i: simulated bending moment
- WT_e: wind turbulence intensity
- M_max: maximum allowed bending moment
- β_i: pitch angle
- β_s,i: simulated pitch angle
- t: time
- Δβ: desired pitch angle change
- P11: measurements
- P12: measurements
- S: simulations
- TTWD_s,i: simulated distance between blade and tower
- S1 to S6: method steps

## Claims

1. Method for operating a wind turbine (100) having a rotor (10) with at least one rotor blade (1, 2, 3), a tower (20) and a pitch setting system (13) for setting the pitch angle (β_i) of the at least one rotor blade (1, 2, 3), the method comprising
- (S1) providing first information (II) which is representative for a bending moment (M_e,i) of the at least one rotor blade (1, 2, 3);
- (S2) providing second information (12) which is representative for the wind turbulence intensity (WT_e) at the rotor (10);
- (S3) providing third information (13) which is representative for a maximum allowed bending moment (M_max) of the at least one rotor blade (1, 2, 3), wherein the maximum allowed bending moment (M_max) is dependent on the wind turbulence intensity at the rotor (10);
- (S4) determining fourth information (14) depending on the first (II), the second (12) and the third information (13), said fourth information (14) being representative for whether the bending moment (M_e,i) exceeds the maximum allowed bending moment (M_max) at the wind turbulence intensity (WT_e); and, if this is the case,
- (S5) generating an output signal (OS) which is configured to cause the pitch setting system (13) to change the pitch angle (β_i) of the at least one rotor blade (1, 2, 3) in order to reduce a deflection of the at least one rotor blade (1, 2, 3) towards the tower (20) when it passes the tower (20) .

2. Method according to claim 1, wherein
- the first information (II) is representative for a bending moment (M_e,i) of the at least one rotor blade (1, 2, 3) when
- the at least one rotor blade (1, 2, 3) passes the tower (20) during rotation of the rotor (10) or
- the at least one rotor blade (1, 2, 3) is close to the tower (20) during rotation of the rotor (10).

3. Method according to claim 1 or 2, wherein
- the rotor (10) comprises two or more rotor blades (1, 2, 3),
- the output signal (OS) is configured to collectively change the pitch angles (β_i) of all rotor blades (1, 2, 3).

4. Method according to any one of the preceding claims, wherein
- the first information (II) is determined depending on measurements (P11) taken with the help of a first sensor system (11),
- the second information (12) is determined depending on measurements (P12) taken with the help of a second sensor system (12).

5. Method according to any one of the preceding claims, wherein
- the third information (13) is determined with the help of computer simulations (S) of the wind turbine (100) simulating the distance (TTWD_s,i) of the at least one rotor blade to the tower when passing the tower in dependency on the bending moment (M_s,i).

6. Method according to any one of the preceding claims, further comprising
- (S6) providing fifth information (15), said fifth information (15) being representative for a desired pitch angle change (Δβ) to be caused by the pitch setting system (13), wherein
- the output signal (OS) comprises the fifth information (15) and is configured to cause the pitch setting system (13) to change the pitch angle (β_i) of the at least one rotor blade (1, 2, 3) by the desired pitch angle change (Δβ).

7. Computer program comprising instructions which, when the program is executed by a computer, cause the computer to carry out the method of any one of claims 1 to 6.

8. Computer-readable data carrier having stored thereon the computer program of claim 7.

9. Control device (30) comprising at least one processor configured to perform the method of any one of claims 1 to 6.

10. Control system (40) for operating a wind turbine (100) having a rotor (10) with at least one rotor blade (1, 2, 3), a tower (20) and a pitch setting system (13) for setting the pitch angle (β_i) of the at least one rotor blade (1, 2, 3), the control system (40) comprising
- a first sensor system (11) configured to take measurements (P11) with the help of which the bending moment (M_e,i) of the at least one rotor blade (1, 2, 3) is determinable,
- a second sensor system (12) configured to take measurements (P12) with the help of which the wind turbulence intensity (WT_e) at the rotor (10) is determinable,
- the control device (30) according to claim 9, wherein
- the control device (30) is signally connectable to the sensor systems (11, 12) in order to provide the control device (30) with the measurements (P11, P12) of the sensor systems (11, 12),
- the control device (30) is signally connectable to the pitch setting system (13) in order to provide the pitch setting system (13) with the output signal (OS) of the control device (30) so that the pitch setting system (13) sets the pitch angle (β_i) of the at least one rotor blade (1, 2, 3) depending on the output signal (OS).

11. Control system (40) according to claim 10, wherein
- the first sensor system (11) comprises at least one strain sensor coupled to the at least one rotor blade (1, 2, 3).

12. Control system (40) according to claim 11, wherein
- the at least one strain sensor is a fiber optic strain sensor.

13. Control system (40) according to claim 11, wherein
- the at least one strain sensor is a strain gauge sensor.

14. Control system (40) according to any one of claims 10 to 13, wherein
- the second sensor system (12) comprises
- at least one sensor for measuring the pitch angle (β_i) of the at least one rotor blade (1, 2, 3),
- at least one sensor for measuring the rotational velocity of the rotor (10), and
- at least one sensor for measuring the power output of the wind turbine (100).

15. Wind turbine (100) comprising
- a rotor (10) with at least one rotor blade (1, 2, 3),
- a tower (20),
- a pitch setting system (13) for setting the pitch angle (β_i) of the at least one rotor blade (1, 2, 3),
- the control system (40) according to any one of claims 10 to 14.
